# EUROPÄISCHE PATENTSCHRIFT

(11) **EP 0 502 816 B1**
(45) Veröffentlichungstag und Bekanntmachung des Hinweises auf die Patenterteilung: **07.01.1999**
(21) Anmeldenummer: 92810101.3
(22) Anmeldetag: 12.02.1992
(51) Int. Cl.: C08K 5/3492, C09D 7/12

(54) **Gegen Lichtschädigung stabilisierte Ueberzugsmaterialien**
Coating compositions resistant to light deterioration
Revêtements résistants aux détériorations par la lumière

(30) Priorität: 21.02.1991 CH 527/91
(43) Veröffentlichungstag der Anmeldung: 09.09.1992
(73) Patentinhaber: Ciba Specialty Chemicals Holding Inc., 4057 Basel (CH)
(72) Erfinder: Valet, Andreas, Dr., W-7859 Eimeldingen (DE); Birbaum, Jean-Luc, Dr., CH-1700 Fribourg 4 (CH); Slongo, Mario, Dr., CH-1712 Tafers (CH)

(56) Entgegenhaltungen:
- EP-A- 0 200 190
- EP-A- 0 389 427
- EP-A- 0 434 608

## Beschreibung

Die Erfindung betrifft die Stabilisierung von Ueberzugsmaterialien durch Zusatz eines UV-Absorbers aus der Klasse der 2-(2-Hydroxyphenyl)-1,3,5-triazine, die in 4- und 6-Stellung durch Phenyl- oder Tolylreste substituiert sind, sowie die Verwendung solcher Ueberzugsmaterialien als Automobilüberzüge.

Es ist bekannt, dass 2-(2-Hydroxyphenyl)-1,3,5-triazine UV-Absorber sind, die sich als Lichtschutzmittel für organische Materialien, wie z.B. für Kunststoffe oder Lacke, verwenden lassen (siehe z.B. US-A-3 118 887, US-A-3 244 708, CH-A-480091). Auch deren Kombination mit sterisch gehinderten Aminen ist bekannt (US-A-4 619 956). Bei den bisher untersuchten 2-(2-Hydroxyphenyl)-1,3,5-triazinen sind die 4- und 6-Stellung des Triazins meist entweder durch eine 2-Hydroxyphenylgruppe oder durch eine 2,4-Dimethylphenylgruppe substituiert.

Es wurde nunmehr gefunden, dass 2-(2-Hydroxyphenyl)-1,3,5-triazine, die in 4- und 6-Stellung entweder eine Phenyl- oder p-Tolylgruppe enthalten, in Ueberzugsmaterialien überraschenderweise eine bessere Stabilisatorwirkung zeigen als diejenigen Hydroxyphenyltriazine, die in 4- und 6-Stellung eine 2,4-Dimethylphenylgruppe besitzen. Sie zeichnen sich auch durch eine hohe thermische und photochemische Beständigkeit aus.

Die Erfindung betrifft daher ein gegen Schädigung durch Licht, Sauerstoff und Wärme stabilisiertes Ueberzugsmaterial, enthaltend
a) ein filmbildendes Bindemittel
b) als Stabilisator mindestens eine Hydroxyphenyltriazin-Verbindung der Formel I 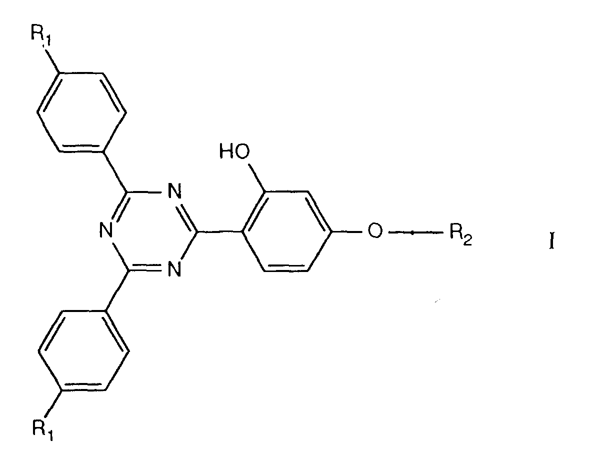 worin R₁ Wasserstoff oder Methyl bedeutet,
   und
   R₂ Wasserstoff, C₁-C₁₈-Alkyl, C₆-C₂₀-Alkylcycloalkyl, C₅-C₈-Cycloalkyl oder -CH₂COPhenyl bedeutet.

Das filmbildende Bindemittel der Komponente a) kann ein thermoplastisches oder thermohärtbares Harz sein, vorwiegend ist es ein thermohärtbares Harz. Beispiele hierfür sind Alkyd-, Acryl-, Polyester-, Phenol-, Melamin-, Epoxid-, Polyurethanharze und deren Gemische.

### Beispiele von Ueberzugsmitteln mit speziellen Bindemitteln sind:

1. Lacke auf Basis von kalt- oder heiss-vernetzbaren Alkyd-, Acrylat-, Polyester-, Epoxid- oder Melaminharzen oder Mischungen solcher Harze, gegebenenfalls mit Zusatz eines sauren Härtungskatalysators:
2. Zweikomponenten-Polyurethanlacke auf Basis von hydroxylgruppenhaltigen Acrylat-, Polyester- oder Polyetherharzen und aliphatischen oder aromatischen Polyisocyanaten;
3. Einkomponenten-Polyurethanlacke auf Basis von blockierten Polyisocyanaten, die während des Einbrennens deblockiert werden;
4. Zweikomponentenlacke auf Basis von (Poly)ketiminen und aliphatischen oder aromatischen Polyisocyanaten;
5. Zweikomponentenlacke auf Basis von (Poly)ketiminen und einem ungesättigten Acrylatharz oder einem Polyacetoacetatharz oder einem Methylacrylamidoglykolatmethylester;
6. Zweikomponentenlacke auf Basis von carboxyl- oder aminogruppenhaltigen Polyacrylaten und Polyepoxiden;
7. Zweikomponentenlacke auf Basis von anhydridgruppenhaltigen Acrylatharzen und einer Polyhydroxy- oder Polyaminokomponente;
8. Zweikomponentenlacke auf Basis von (Poly)oxazolinen und anhydridgruppenhaltigen Acrylatharzen oder ungesättigten Acrylatharzen oder aliphatischen oder aromatischen Polyisocyanaten;
9. Zweikomponentenlacke auf Basis von ungesättigten Polyacrylaten und Polymalonaten;
10. thermoplastische Polyacrylatlacke auf Basis von thermoplastischen Acrylatharzen oder fremdvernetzenden Acrylatharzen in Kombination mit veretherten Melaminharzen;
11. Lacksysteme auf Basis von siloxanmodifizierten oder fluormodifizierten Acrylatharzen.

Bei den Stabilisatoren der Formel I handelt es sich um bekannte Verbindungen oder um Verbindungen, die in Analogie zu bekannten Verbindungen hergestellt werden können. Sie lassen sich allgemein aus den Verbindungen der Formel I, in denen R₂ Wasserstoff ist, durch Einführung des Substituenten R₂ herstellen, beispielsweise durch Veretherung, Veresterung, Hydroxyalkylierung oder Carbamoylierung der phenolischen OH-Gruppe in 4-Stellung des 2-Hydroxyphenylringes. Die 2-Hydroxygruppe reagiert dabei bei geeigneter Reaktionsführung nicht, weil sie durch eine Wasserstoffbrücke blockiert ist. Solche Methoden sind z.B. in US-A-3 118 887, US-A-3 244 708 oder US-A-3 423 360 beschrieben.

Die Ausgangsmaterialien, Verbindungen der Formel I, in denen R₂ Wasserstoff ist, lassen sich durch Umsetzung der entsprechenden Diarylchlortriazine mit Resorcin unter Friedel-Crafts-Bedingungen herstellen (Helv. Chim. Acta 55, 1566 (1972)) oder aus Benzamidin und Phenylresorcylat (US-A-3 118 887).

Wenn in Formel I R₂ C₁-C₁₈-Alkyl bedeutet, so kann dies lineares oder verzweigtes Alkyl sein, wie z.B. Methyl, Ethyl, n-Propyl, iso-Propyl, n-Butyl, sec-Butyl, tert-Butyl, Pentyl, Hexyl, Heptyl, Octyl, 2-Ethylhexyl, 1,1,3,3-Tetramethylbutyl, Decyl, Undecyl, Dodecyl, Tetradecyl, Hexadecyl oder Octadecyl.

R₂ als C₆-C₂₀-Alkylcycloalkyl ist vorzugsweise Methylcyclohexyl.

Bevorzugt als Komponente b) sind Verbindungen der Formel 1, worin R₁ Wasserstoff oder Methyl ist, m 1 ist und R₂ R₂ C₁-C₁₈-Alkyl, C₆-C₂₀-Alkylcycloalkyl, C₅-C₈-Cycloalkyl mit Ausnahme von Cyclohexyl, oder -CH₂COPhenyl bedeutet.

Die erfindungsgemässen Ueberzugsmaterialien können weitere Stabilisatoren enthalten, z.B. die folgenden Klassen von Stabilisatoren:
1. Antioxidantien
   1.1. Alkylierte Monophenole, z.B. 2,6-Di-tert.butyl-4-methylphenol, 2-Tert.butyl-4,6-di-methylphenol, 2,6-Di-tert.butyl-4-ethylphenol, 2,6-Di-tert.butyl-4-n-butylphenol, 2,6-Di-tert.butyl-4-i-butylphenol,2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.
   1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.
   1.3. Hydroxylierte Thiodiphenylether, z.B. 2,2'-Thio-bis-(6-tert.-butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).
   1.4. Alkyliden-Bisphenole, z.B. 2,2'-Methylen-bis-(6-tert.butyl-4-methylphenol), 2,2'-Methylen-bis-(6-tert.butyl-4-ethylphenol), 2,2'-Methylen-bis-[4-methyl-6-(α-methyl-cyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethyliden-bis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-di-methylbenzyl)-4-nonylphenol], 4,4'-Methylen-bis-(2,6-di-tert.-butylphenol), 4,4'-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1 -Bis-(5-tert.butyl-4-hydroxy-2-methyl-phenyl)-3-n-dodecylmercaptobutan, Ethylenglycol-bis-[3,3-bis-(3'-tert.-butyl-4'-hydroxyphenyl)-butyrat], Bis-(3-tert.butyl-4-hydroxy-5-methyl-phenyl)-dicyclopentadien, Bis-[2-(3'-tert.butyl-2'-hydroxy-5'-methyl-benzyl)-6-tert.butyl-4-methyl-phenyl]-terephthalat.
   1.5 Benzylverbindungen, z.B. 1,3,5-Tris-(3,5-di-tert.butyl-4-hydroxy-benzyl)-2,4,6-tri-methylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.
   1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.-butyl-4-hydroxyphenyl)-carbaminsäureoctylester.
   1.7. Ester der β-(3,5-Di-tert.butyl-4-hydroxyphenyl)-propionsäure mit ein- oder mehrwertigen Alkoholen, wie z.B. mit Methanol, Octa- decanol, 1,6-Hexandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid.
   1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
   1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.
   1.10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.-butyl-4-hydroxyphenylpropionyl)-trimethylendiamin, N,N'-Bis-(3,5-di-tert.butyl-4-hydroxyphenylpropionyl)-hydrazin.
2. UV-Absorber und Lichtschutzmittel
   2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.-butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.
   2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis-(2,2,6,6-tetramethyl-piperidyl)-sebacat, Bis-(1,2,2,6,6-pentamethylpiperidyl)-sebacat, n-Butyl-3,5-di-tert.butyl-4-hydroxybenzylmalonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl )-1,2,3,4-butantetraoat, 1,1'-(1,2-Ethandiyl)-bis-(3,3,5,5-tetramethyl-piperazinon).
   2.7. Oxalsäurediamide, wie z.B. 4,4'-Di-octyloxy-oxanilid, 2,2'-Di-octyloxy-5,5'-di-tert.-butyl-oxanilid, 2,2'-Di-dodecyloxy-5,5'di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-dodecyloxyphenyl)-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl )-hydrazin, 3-Salicyloylamino-1,2,4-triazol, Bis-(benzyliden)-oxalsäuredihydrazid.
4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.

Bevorzugt enthalten die Ueberzugsmaterialien als weiteren Stabilisator ein Lichtschutzmittel vom Typ der sterisch gehinderten Amine, insbesondere ein Lichtschutzmittel, das mindestens eine Gruppe der Formel 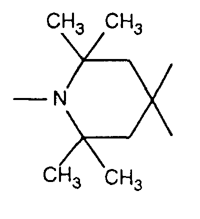 enthält. Beispiele solcher Lichtschutzmittel sind oben unter Punkt 2.6 aufgeführt.

Gegenstand der Erfindung ist auch ein Verfahren zur Stabilisierung von Ueberzugsmaterialien gegen Schädigung durch Licht, Sauerstoff und Wärme, dadurch gekennzeichnet, daß man diesen Materialien mindestens eine Hydroxyphenyltriazin-Verbindung der Formel I (Komponente b) beimischt.

Die Menge der zugesetzten Stabilisatoren hängt ab von der Art des Bindemittels und vom Verwendungszweck des Ueherzuges. Vorzugsweise enthält das Ueberzugsmaterial 0,1 bis 5 Gew.-% eines Stabilisators der Formel I, bezogen auf die Menge an Bindemittel (Komponente a).

Falls auch ein sterisch gehindertes Amin zugesetzt wird, so beträgt dessen Menge vorzugsweise 0,01 bis 2 Gew.-%, bezogen auf das Bindemittel (Komponente a).

Weitere bevorzugte Costabilisatoren sind die Lichtschutzmittel vom Typ der 2-(2'-Hydroxyphenyl)-benztriazole.

Die Ueberzugsmaterialien können ein organisches Lösungsmittel enthalten, wie z.B. aromatische oder aliphatische Kohlenwasserstoffe, Ketone, Alkohle, Ester oder Ether oder Gemische davon. Die Ueberzusmaterialien können eine wässrige Dispersion oder Lösung sein oder sie können auch frei von Lösungs- oder Dispergiermitteln sein. Letzteres ist z.B. der Fall bei Pulverlacken oder strahlenhärtbaren Lacken. Wässrige Dispersionen oder Lösungen werden z.B. für Elektrotauchlacke verwendet.

Die Ueberzugsmittel können ein Pigment enthalten, z.B. ein organisches oder anorganisches Pigment oder ein Metallpigment. Die Ueberzugsmittel können aber auch pigmentfrei sein (Klarlacke).

Die Ueberzugsmittel können weitere Additive enthalten wie sie in der Technologie der Ueberzugsmittel üblich sind, z.B. Füllstoffe, Verlaufhilfsmittel, Thixotropiemittel, Dispergiermittel, Haftverbesserer, Korrosionsinhibitoren oder Härtungskatalysatoren.

Die Ueberzugsmittel können als Einschicht- oder Zweischicht-Ueberzug appliziert werden. Im Fall von Zweischicht-Systemen wird der erfindungsgemäss stabilisierte Ueberzug vorzugsweise als pigmentfreie Deckschicht appliziert.

Die Ueberzugsmittel können auf verschiedene Substrate aufgebracht werden, z.B. auf Metall, Holz, Plastik oder keramische Massen. Das Aufbringen auf diese Substrate kann nach den hierfür üblichen Methoden geschehen, beispielsweise durch Streichen, Besprühen, Giessen, Tauchen, Elektrophorese oder in Wirbelschicht.

Die erfindungsgemässen Ueberzugsmaterialien eignen sich vor allem als Automobil-Ueberzug, weil hierbei hohe Anforderungen an die Lichtbeständigkeit gestellt werden.

Die folgenden Beispiele zeigen die Durchführung der Erfindung ohne die Erfindung auf die Beispicle zu begrenzen. Hierin bedeuten Teile und Prozente Gewichts-Teile und Gewichts-Prozente.

Beispiel: Ein Klarlack wird bereitet aus

| | |
|---|---|
| 54,5 | Teilen eines Acrylharzes (Uracron^{®} 2263 XB, DSM Resin BV) (50 %ige Lösung in Xylol) |
| 16,3 | Teilen eines Melaminharzes (Cymel^{®} 237, Amer. Cyanamid Co.) (90 %ige Lösung) |
| 19,4 | Teilen Xylol |
| 5,5 | Teilen Butylglykolacetat |
| 3,3 | Teilen Butanol und |
| 1,0 | Teil eines Verlaufshilfsmittels (Baysilon^{®}A, Bayer AG) (1 %ige Lösung in Xylol). |

Die in den Tabellen 1 - 3 aufgeführten UV-Absorber werden in Xylol gelöst zu dem Klarlack zugegeben in einer Menge von 1,5 % bezogen auf den Festkörper des Klarlackes.

Die so bereiteten Lackproben werden mit einer Mischung aus Xylol, Butanol und Butylglykolacetat (13:6:1) auf Spritzfähigkeit verdünnt und auf ein vorbereitetes Aluminiumblech (coil coat, Automobilfüller, silbermetallic Basislack) beziehungsweise auf Glasplatten aufgespritzt. Nach 15 Minuten Lagerung werden die Proben 30 Minuten bei 130°C gehärtet.

Die Proben werden dann in einem UVCON-Bewitterungsgerät der Fa. Atlas (UVB-313 Lampen) bei einem Zyklus von 8 h UV-Bestrahlung bei 70°C und 4 h Kondensation bei 50°C bewittert.

Folgende Triazinverbindungen werden getestet:

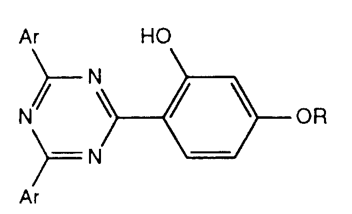

| | |
|---|---|
| UV-1 R = C₈H₁₇ | Ar = Phenyl |
| UV-2 R = C₈H₁₇ | Ar = p-Tolyl |
| UV-3 R = C₈H₁₇ | Ar = 2,4-Dimethylphenyl (Vergleich) |
| UV-4 R = C₃H₇ | Ar = Phenyl |
| UV-5 R = C₃H₇ | Ar = 2,4-Dimethylphenyl (Vergleich) |
| UV-6 R = C₁₂H₂₅ | Ar = Phenyl |
| UV-7 R = C₁₂H₂₅ | Ar = p-Tolyl |
| UV-8 R = C₁₂H₂₅ | Ar = 2,4-Dimethylphenyl (Vergleich) |

Von den Proben auf silbermetallic Basislack wird in regelmässigen Abständen der Oberflächenglanz (20°-Glanz gemäss DIN 67530) gemessen. Die Ergebnisse dieser Messungen sind in Tabellen 1 und 2 aufgeführt. Die Dicke des Lackfilms nach dem Härten beträgt ca. 20 µm bei den Proben in Tabelle 1 und ca. 43 µm bei den Proben in Tabelle 2.

Ausserdem wird bei den auf Glasplatten applizierten Proben (Dicke des Lackfilms nach dem Härten ca. 20 µm) der Verlust an UV-Absorber während der Bewitterung spektroskopisch bestimmt. Die Ergebnisse dieser Messungen sind in Tabelle 3 dargestellt.

**Tabelle 1:**

| 20°-Glanz gemäß DIN 67530 vor und nach Bewitterung, ca. 20 µm Klarlack auf silbermetallic Basislack | | | |
|---|---|---|---|
| Stabilisator (1,5 %) | 20°-Glanz nach | | 5000 h Bewitterung |
| | 0 h | 3600 h | |
| UV-1 | 86 | 47 | 36 |
| UV-2 | 86 | 75 | 55 |
| UV-3 | 84 | 24 | <24 |
| UV-4 | 82 | 67 | 38 |
| UV-5 | 83 | 47 | <25 |
| UV-7 | 84 | 68 | 34 |
| UV-8 | 85 | 53 | <25 |

**Tabelle 2:**

| 20°-Glanz gemäß DIN 67530 vor und nach Bewitterung, ca. 43 µm Klarlack auf silbermetallic Basislack | | | |
|---|---|---|---|
| Stabilisator (1,5 %) | 20°-Glanz nach | | 4400 h Bewitterung |
| | 0 h | 3200 h | |
| UV-1 | 89 | 52 | 56 |
| UV-3 | 88 | 7 | <7 |
| UV-4 | 89 | 67 | 59 |
| UV-5 | 88 | 64 | 36 |

**Tabelle 3:**

| Verlust an UV-Absorber nach Bewitterung, gemessen bei Wellenlänge λₘₐₓ/nm, Substrat Glasplatte | | |
|---|---|---|
| Stabilisator (1,5 %) | λₘₐₓ/nm | Verlust (%) an UV-Absorber nach 800 h Bewitterung |
| UV-1 | 342 | 1,9 |
| UV-3 | 338 | 8,0 |
| UV-7 | 340 | 3,8 |
| UV-8 | 338 | 9,5 |

## Patentansprüche

1. Gegen Schädigung durch Licht, Sauerstoff und Wärme stabilisiertes Ueberzugsmaterial, enthaltend
a) ein filmbildendes Bindemittel
b) als Stabilisator mindestens eine Hydroxyphenyltriazin-Verbindung der Formel I 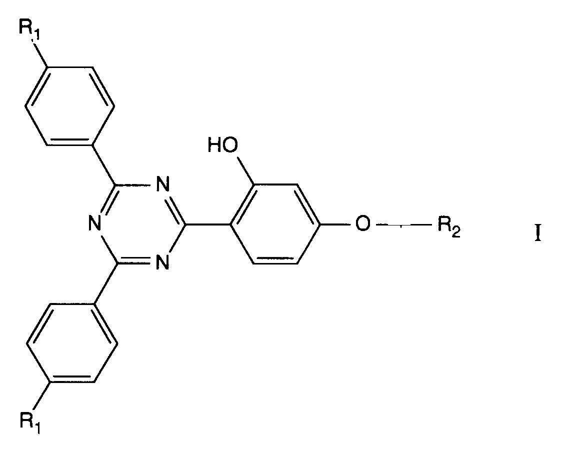 worin R₁ Wasserstoff oder Methyl bedeutet,
und
R₂ Wasserstoff, C₁-C₁₈-Alkyl, C₆-C₂₀-Alkylcycloalkyl, -CH₂COPhenyl, oder C₅-C₈-Cycloalkyl bedeutet.

2. Ueberzugsmaterial gemäss Anspruch 1, dadurch gekennzeichnet, dass die Komponente a) ein Alkydharz, Acrylharz, Polyesterharz, Phenolharz, Melaminharz, Epoxidharz, Polyurethanharz oder ein Gemisch solcher Harze ist.

3. Ueberzugsmaterial gemäss Anspruch 1, dadurch gekennzeichnet, dass die Komponente b) eine Verbindung der Formel I ist, worin R₁ Wasserstoff oder Methyl ist, m 1 ist und R₂ C₁-C₁₈-Alkyl, C₆-C₂₀-Alkylcycloalkyl, -CH₂COPhenyl, oder C₅-C₈-Cycloalkyl bedeutet.

4. Ueberzugsmaterial gemäss Anspruch 1, enthaltend als weiteren Stabilisator ein Lichtschutzmittel vom Typ der sterisch gehinderten Amine.

5. Ueberzugsmaterial gemäss Anspruch 4, enthaltend als weiteren Stabilisator ein Lichtschutzmittel das mindestens eine Gruppe der Formel 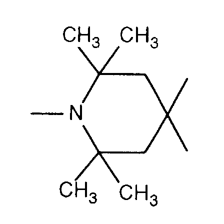 enthält.

6. Ueberzugsmaterial gcmäss Anspruch 1, enthaltend ein organisches Lösungsmittel.

7. Ueberzugsmaterial gemäss Anspruch 1, enthaltend ein Pigment.

8. Ueberzugsmaterial gemäss Anspruch 1, enthaltend 0,1 bis 5 Gew.-% eines Stabilisators der Formel I, bezogen auf die Komponente a).

9. Ueberzugsmaterial gemäss Anspruch 4, enthaltend 0,01 bis 2 Gew.-% eines Lichtschutzmittels vom Typ der sterisch gehinderten Amine, bezogen auf die Komponente a).

10. Ueberzugsmaterial gemäss Anspruch 1, enthaltend als weiteren Stabilisator ein Lichtschutzmittel vom Typ der 2-(2'-Hydroxyphenyl)-benztriazole.

11. Ueberzugsmaterial gemäss Anspruch 1, das eine wässrige Dispersion oder Lösung von a) und b) ist.

12. Verwendung des Ueberzugsmittels gemäss Anspruch 1 als Ueberzug für Automobile.

13. Verwendung eines pigmentfreien Ueberzugs gemäss Anspruch 1 als Deckschicht in einem Zweischichten-Ueberzug.

14. Verfahren zur Stabilisierung von Ueberzugsmaterialien gegen Schädigung durch Licht, Sauerstoff und Wärme, dadurch gekennzeichnet, daß man diesen Materialien mindestens eine Hydroxyphenyltriazin-Verbindung der Formel I gemäß Anspruch 1 beimischt.

## Claims

1. A coating material stabilised against damage by light, oxygen and heat and comprising
a) a film-forming binder,
b) as stabiliser, at least one hydroxyphenyltriazine compound of formula I 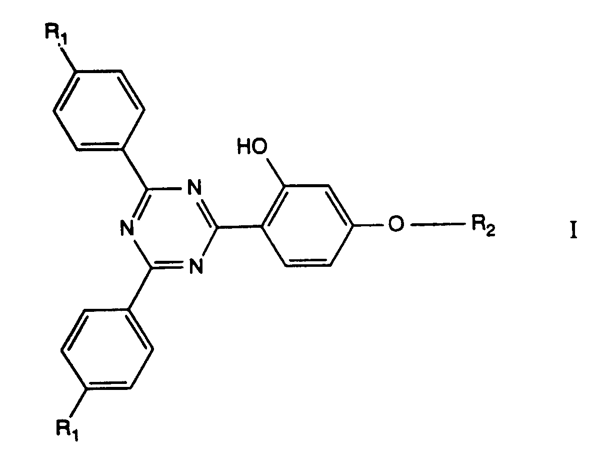 wherein R₁ is hydrogen or methyl and
R₂ is hydrogen, C₁-C₁₈alkyl, C₆-C₂₀alkylcycloalkyl, -CH₂CO-phenyl or C₅-C₈cycloalkyl.

2. A coating material according to claim 1, wherein component a) is an alkyd, acrylic, polyester, phenolic, melamine, epoxy or polyurethane resin or a mixture of such resins.

3. A coating material according to claim 1, wherein component b) is a compound of formula I wherein R₁ is hydrogen or methyl and m is 1 and R₂ is C₁-C₁₈alkyl, C₆-C₂₀alkylcycloalkyl, -CH₂CO-phenyl or C₅-C₈cycloalkyl.

4. A coating material according to claim 1, comprising as further stabiliser a light stabiliser of the type of the sterically hindered amines.

5. A coating material according to claim 4, comprising as further stabiliser a light stabiliser which contains at least one group of formula

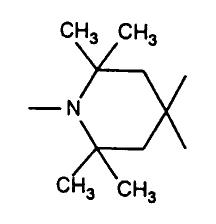

6. A coating material according to claim 1, comprising an organic solvent.

7. A coating material according to claim 1, comprising a pigment.

8. A coating material according to claim 1, comprising 0.1 to 5 % by weight of a stabiliser of formula I, based on component a).

9. A coating material according to claim 4, comprising 0.01 to 2 % by weight of a light stabiliser of the type of the sterically hindered amines, based on component a).

10. A coating material according to claim 1, comprising as further stabiliser a light stabiliser of the type of the 2-(2'-hydroxyphenyl)benzotriazoles.

11. A coating material according to claim 1, which is an aqueous dispersion or solution of a) and b).

12. Use of a coating material according to claim 1 as an automotive coating.

13. Use of a pigment-free coating according to claim 1 as the top layer of a two-layer coating.

14. A method of stabilising a coating material against damage by light, oxygen and heat, which comprises admixing to this material at least one hydroxyphenyltriazine compound of formula I according to claim 1.

## Revendications

1. Matière de revêtement stabilisée contre la dégradation induite par la lumière, l'oxygène et la chaleur, contenant :
a) un liant filmogène,
b) comme stabilisant, au moins un composé de hydroxyphényltriazine de formule I 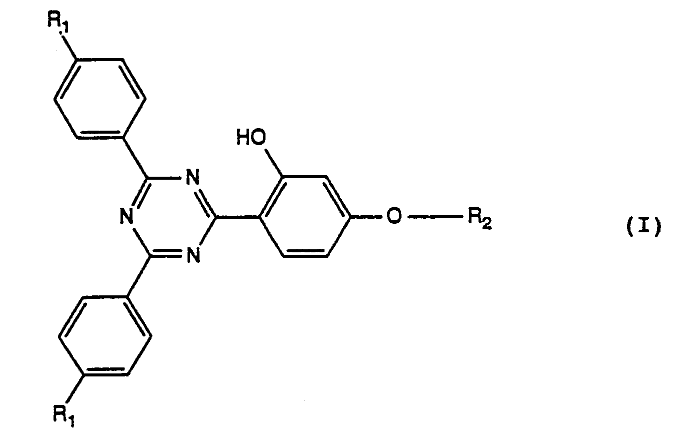 où R₁ représente un atome d'hydrogène ou un groupe méthyle,
et
R₂ représente un atome d'hydrogène, des groupes alkyle en C₁-C₁₈, alkylcycloalkyle en C₆-C₂₀, -CH₂CO-phényle ou cycloalkyle en C₅-C₈.

2. Matière de revêtement selon la revendication 1, caractérisée en ce que le composant a) est une résine alkyde, une résine acrylique, une résine de polyester, une résine phénolique, une résine de mélamine, une résine époxyde, une résine de polyuréthanne ou un mélange de telles résines.

3. Matière de revêtement selon la revendication 1, caractérisée en ce que le composant b) est un composé de formule I, où R₁ représente un atome d'hydrogène ou un groupe méthyle, m vaut 1 et R₂ représente des groupes alkyle en C₁-c₁₈, alkylcycloalkyle en C₆-C₂₀, -CH₂CO-phényle ou cycloalkyle en C₅-C₈.

4. Matière de revêtement selon la revendication 1, contenant comme autre stabilisant un agent photoprotecteur du type amine stériquement encombrée.

5. Matière de revêtement selon la revendication 4, contenant comme autre stabilisant un agent photoprotecteur qui contient au moins un groupe de formule

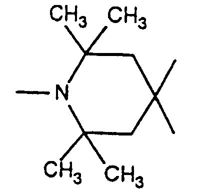

6. Matière de revêtement selon la revendication 1, contenant un solvant organique.

7. Matière de revêtement selon la revendication 1, contenant un pigment.

8. Matière de revêtement selon la revendication 1, contenant de 0,1 à 5 % en poids d'un stabilisant de formule I, par rapport au composant a).

9. Matière de revêtement selon la revendication 4, contenant de 0,01 à 2 % en poids d'un agent photoprotecteur du type amine stériquement encombrée, par rapport au composant a).

10. Matière de revêtement selon la revendication 1, contenant comme autre stabilisant un agent photoprotecteur du type de 2-(2'-hydroxyphényl)-benzotriazole.

11. Matière de revêtement selon la revendication 1, qui est une dispersion ou une solution aqueuse de a) et b).

12. Utilisation de l'agent de revêtement selon la revendication 1, comme revêtement pour automobile.

13. Utilisation d'un revêtement sans pigment selon la revendication 1, comme couche de finition dans un revêtement à deux couches.

14. Procédé pour la stabilisation de matières de revêtement contre la dégradation induite par la lumière, l'oxygène et la chaleur, caractérisé en ce que l'on ajoute à ces matières par mélange au moins un composé de hydroxyphényltriazine de formule I selon la revendication 1.
